(19) Europäisches Patentamt
European Patent Office
Office européen des brevets

(11) EP 3 432 629 B1

(12) **EUROPEAN PATENT SPECIFICATION**

(45) Date of publication and mention of the grant of the patent:
**12.02.2020 Bulletin 2020/07**

(21) Application number: **17182312.3**

(22) Date of filing: **20.07.2017**

(51) Int Cl.:
***H04W 16/00*** *(2009.01)*
*H04W 84/12* *(2009.01)*
*H04W 40/32* *(2009.01)*
*H04W 84/20* *(2009.01)*
*H04W 24/02* *(2009.01)*

# (54) PARTITIONING A PLURALITY OF WIRELESS ACCESS POINTS INTO MANAGEMENT CLUSTERS

AUFTEILUNG VON MEHREREN DRAHTLOSZUGANGSPUNKTEN IN MANAGEMENT-CLUSTER

PARTITIONNEMENT D'UNE PLURALITÉ DE POINTS D'ACCÈS SANS FIL EN GRAPPES DE GESTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.01.2019 Bulletin 2019/04**

(73) Proprietor: **Nokia Solutions and Networks Oy**
**02610 Espoo (FI)**

(72) Inventors:
- **RAHMAN, Rameez**
  **2018 Antwerp (BE)**
- **LIGATA, Amir**
  **2018 Antwerp (BE)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**US-A1- 2015 023 206**

- **JAIN AARTI ET AL: "Optimal degree centrality based algorithm for cluster head selection in wireless sensor networks", 2014 RECENT ADVANCES IN ENGINEERING AND COMPUTATIONAL SCIENCES (RAECS), IEEE, 6 March 2014 (2014-03-06), pages 1-6, XP032587159, DOI: 10.1109/RAECS.2014.6799575 [retrieved on 2014-04-16]**
- **DINH PHUNG ET AL: "High accuracy context recovery using clustering mechanisms", PERVASIVE COMPUTING AND COMMUNICATIONS, 2009. PERCOM 2009. IEEE INTERNATIONAL CONFERENCE ON, IEEE, PISCATAWAY, NJ, USA, 9 March 2009 (2009-03-09), pages 1-9, XP031453105, ISBN: 978-1-4244-3304-9**
- **BAYU ERFIANTO ET AL: "Signal strength-based adjacency matrix and its eigenvalue in mobile robotic networks", INFORMATION AND COMMUNICATION TECHNOLOGY (ICOICT), 2013 INTERNATIONAL CONFERENCE OF, IEEE, 20 March 2013 (2013-03-20), pages 247-252, XP032447791, DOI: 10.1109/ICOICT.2013.6574581 ISBN: 978-1-4673-4990-1**
- **YEONG-SHENG CHEN ET AL: "Collaborative localization in Wireless Sensor Networks based on dependable RSSI", WIRELESS PERSONAL MULTIMEDIA COMMUNICATIONS (WPMC), 2012 15TH INTERNATIONAL SYMPOSIUM ON, IEEE, 24 September 2012 (2012-09-24), pages 341-347, XP032294399, ISBN: 978-1-4673-4533-0**
- **ASIF WAQAR ET AL: "Combined Banzhaf & Diversity Index (CBDI) for critical node detection", JOURNAL OF NETWORK AND COMPUTER APPLICATIONS, ACADEMIC PRESS, NEW YORK, NY, US, vol. 64, 5 February 2016 (2016-02-05), pages 76-88, XP029470706, ISSN: 1084-8045, DOI: 10.1016/J.JNCA.2015.11.025**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 432 629 B1

## Description

### Field of Invention

The field of the invention relates to a partitioning method and apparatus for partitioning a plurality of wireless access points into a plurality of management clusters. More in particular, the field of the invention relates to partitioning access points within a distributed wireless network into management clusters.

### Background

Prior art is JAIN AARTI ET AL: "Optimal degree centrality based algorithm for cluster head selection in wireless sensor networks", 2014 RECENT ADVANCES IN ENGINEERING AND COMPUTATIONAL SCIENCES (RAECS), IEEE, 6 March 2014 (2014-03-06), pages 1-6, XP032587159, DOI: 10.1109/ RAECS.2014.6799575.

Wireless networks such as Wi-Fi networks are currently being deployed in a massive and uncoordinated manner with the objective of enabling the ubiquitous connectivity of an end user. This has lead to very dense deployments with a significant amount of coverage overlap which results in inter-network dependency. This is usually reflected through problems regarding contention and/or interference.

These problems are particularly severe in residential/urban areas. In order to remediate the described problems, network operators troubleshoot networks through specific actions, often referred as recommendation. Conventionally, troubleshooting algorithms were designed per home basis, such that each network is optimized independently and on an individual basis. In this manner, when a problem is detected in a network, the optimization algorithm is triggered. Since there exists a high correlation between networks, such individual approach might lead to frequent algorithm triggering, i.e. a domino effect.

Recently, a prospect of Wi-Fi self-organizing network (Wi-Fi SON) was introduced wherein groups or clusters of Wi-Fi access points (APs) are optimized rather than independent optimization algorithms being applied on an individual AP basis. However, in order for such Wi-Fi SON to work, groups, i.e. clusters or cliques, of APs should be determined. Once the groups or clusters are determined, an optimization algorithm may be executed in a distributed manner, e.g. channel selection may be managed within one group or cluster of APs.

A problem, however, is how to derive such groups or clusters of APs which would, in perspective of the network operator, represent disjoint sets of APs. In other words, deriving clusters of access points belonging to the same operator, wherein access points within a cluster can be managed as a group, presents an important challenge in wireless network management, for example in the context of Wi-Fi SON.

### Summary

Currently, network level partitioning methods exist which are fully location driven, which means that the groups or clusters of APs under management of the same operator are derived based on their spatial location. Such partitioning is currently used by network operators for monitoring and reporting purposes.

The object of embodiments of the present invention is to provide an improved partitioning method for partitioning a plurality of wireless access points into management clusters, such that the access points within the clusters can be managed more efficiently. More in particular, the object of embodiments of the present invention is to provide a partitioning method and apparatus for partitioning access points into management clusters such that the performance of the wireless network is improved and thus a better quality of experience is offered to end users of the wireless network.

According to a first aspect of the present invention there is provided a partitioning method for partitioning a plurality of wireless access points into a plurality of management clusters of access points, wherein each management cluster of the plurality of management clusters comprises at least one access point of the plurality of access points. The partitioning method comprises a step of obtaining from each access point of the plurality of access points neighbour information, wherein the neighbour information comprises at least an access point identifier of each neighbouring access point which is sensed by said respective access point and a signal strength indicator corresponding to the sensed neighbouring access point. The partitioning method further comprises a step of determining for each access point of the plurality of access points a centrality parameter based on the obtained neighbour information, wherein the centrality parameter is representative for an amount of influence the respective access point has within the plurality of access points. The partitioning method further comprises a step of partitioning the plurality of access points into a first management cluster and at least one further management cluster by: forming the first management cluster by including in the first management cluster a first access point as primary member, the first access point having the highest centrality parameter from among the plurality of access points, and any neighbouring access point sensed by the first access point as secondary member; and, for each further access point of the plurality of access points except the first access point, in order of descending centrality parameter, forming a further management cluster by including in the further management cluster the respective further access point as primary member and, as secondary member, any neighbouring access point sensed by the respective further access point which has not been included as secondary member in another management cluster.

Embodiments of the present invention are based *inter alia* on the insight that by forming management clusters of access points based on obtained neighbour information and a determined centrality parameter, access points within one cluster will exhibit a higher amount of dependency and/or correlation as compared to access points within a cluster that is formed based on a spatial location of the access points. Indeed, although two access points may be located close to each other, they might not, or hardly, be able to detect each others presence or signal due to obstacles, such as a wall, ceiling or floor positioned between the two access points. By forming management clusters based on obtained signal strength indicators, it is guaranteed that access points within a cluster actually do sense and influence each other. By arranging access points which influence each other within the same management cluster, the cluster of access points may be managed more efficiently as a group as compared to prior art solutions wherein access points are managed on an individual basis.

Furthermore, by including in the first management cluster, the access point with the highest centrality parameter as primary member of the first management cluster, and adding the neighbouring access points of the access point with the highest centrality parameter as secondary members of the first management cluster, it is achieved that a management cluster is formed around a "central" access point, i.e. primary member, which has a large influence on the plurality of access points, and thus provides a good starting point for managing access points in group. This effect is further achieved by arranging the access points according to centrality parameter, in descending order, and consequently forming further management clusters around these access points, in descending order of centrality parameter. By prioritizing cluster formation around access points with higher influence, and by only adding neighbouring access points as secondary member to a management cluster if they have not yet been included in a previous management cluster, i.e. around an access point with a relatively higher centrality parameter, an efficient manner of cluster formation and network management is provided. In other words, management clusters are formed such that access points belonging to the same management cluster are correlated and sensed by each other and wherein access points belonging to different management clusters operate substantially independent of each other.

A further advantage of the described partitioning method is that by taking into account neighbour information while forming management clusters, alien access points, i.e. access points belonging to a different operator than the managing operator of the plurality of access points, may be indirectly taken into account since their presence can be sensed by the access points of the managing operator. This is not possible when forming clusters merely based on spatial location information since a managing operator is not aware of the location of alien access points belonging to another operator.

According to an embodiment, determining the centrality parameter comprises representing the plurality of access points as a graph, based on the obtained neighbour information, wherein each access point is represented by a vertex and wherein an edge between vertices represents that corresponding access points sense each other. According to this embodiment the centrality parameter of an access point is representative for an amount of shortest paths running trough the vertex corresponding to said access point.

In this manner, an efficient and computationally simple method is provided to determine a centrality or influence of an access point within the plurality of access points. In an exemplary embodiment, the centrality parameter of an access point may be determined by the betweenness centrality (BC) of the vertex in the graph representation corresponding to the access point. In this case, the amount of shortest paths passing through the respective vertex can be representative for the influence of the corresponding access point within the plurality of access points.

According to a preferred embodiment, the partitioning method further comprises: obtaining from each access point within a formed management cluster activity information being representative for an amount of data consumption of said respective access point; determining a management cluster activity level of said formed management cluster based on the obtained activity information; and reforming said formed management cluster when the management cluster activity level is higher than a first predetermined activity threshold.

In this manner, by taking into account the activity within a management cluster and reforming a management cluster when the activity level is too high, a provided network performance is improved as compared to prior art solutions which only take into account the spatial location of the access points. Moreover, a quality of experience of end users of the network or management cluster may be improved. It is clear to the skilled person that the first predetermined activity threshold may vary according to the desired performance and functionality of the wireless network constituted by the plurality of access points.

According to an exemplary embodiment, reforming said formed management cluster comprises evicting at least one secondary member from the formed management cluster such that the cluster activity level of the reformed management cluster is equal to or below the first predetermined activity threshold. The at least one secondary member is selected based on neighbour information obtained from the primary member of the formed management cluster.

In this manner, it is achieved that the management cluster activity decreases and that a large amount of dependency and/or correlations still remains amongst the access points within the management cluster. The access point or access points which are evicted are selected based on neighbour information obtained from the primary member, i.e. central access point, of the formed management cluster. More in particular, the access point or access points which are considered to be the "furthest" from the primary member in terms of obtained signal strength can be evicted from the management cluster. This way, the activity level of a management cluster may be lowered while maintaining a high amount of dependency amongst the access points within the management cluster such that the access points within the management cluster can be efficiently managed together, in group.

According to a preferred embodiment the partitioning method further comprises assigning the at least one evicted secondary member to another formed cluster, wherein the at least one evicted secondary member is sensed by the primary member of the other formed cluster, and wherein the primary member of the reformed cluster has a higher centrality parameter as compared to the primary member of the other formed cluster.

In this manner, an access point which is evicted from one management cluster can be included in a further management cluster formed around central access point, i.e. primary member, with a lower centrality parameter as compared to the primary member of the one management cluster. This way the activity level of the one management cluster may be lowered while the activity level of the further management cluster may be increased. Taking into account the described method of forming management clusters, wherein neighbouring access points are only included in a management cluster as secondary member when they are not already included as a secondary member in a previous management cluster, with higher centrality parameter, the further management cluster is likely to have a lower overall activity level as compared to the one management cluster. Furthermore, since the evicted access point is sensed by the primary member of the further management cluster, it is achieved that a high dependency and/or correlation remains amongst the access points within the further management cluster. In other words, both the one management cluster and the further management cluster can be managed in an efficient way.

According to a further embodiment, wherein an access point is included as a primary member in a primary management cluster and as a secondary member in a secondary management cluster, the partitioning method comprises determining a combined activity level of the primary management cluster and the secondary management cluster based on the obtained activity information from each access point included in the primary and secondary management clusters. The partitioning method further comprises, if the combined activity level is below a second predetermined activity threshold, assigning the primary member and secondary members of the primary management cluster to the secondary management cluster; or, if the combined activity level is equal to or higher than the second predetermined activity threshold, evicting the primary member of the primary management cluster from the secondary management cluster.

In this manner, it is achieved that a particular access point is included in only one management cluster. This way, dependency and/or correlation between access points belonging to different management clusters can be reduced to a minimum, which contributes to an efficient management on cluster level.

According to a preferred embodiment, the steps of obtaining activity information, determining the management cluster activity level and reforming the formed management cluster are executed periodically.

In this manner, the partitioning method allows for monitoring the management cluster partitioning over time. Moreover, this allows for updating the formed management clusters, for example when certain access points of the plurality of access points are relocated, when new alien access points are deployed which influence the access points of the managing operator, and/or when an activity level of a formed management cluster increases and reaches a critical value.

According to another aspect of the present invention, there is provided a partitioning apparatus for partitioning a plurality of wireless access points into a plurality of management clusters of access points, wherein each management cluster of the plurality of management clusters comprises at least one access point of the plurality of access points. The partitioning apparatus comprises an information obtaining unit configured to obtain from each access point of the plurality of access points neighbour information, wherein the neighbour information comprises at least an access point identifier of each neighbouring access point which is sensed by said respective access point; and a signal strength indicator corresponding to said sensed neighbouring access point. The partitioning apparatus further comprises a determining unit configured to determine for each access point of the plurality of access points a centrality parameter based on the obtained neighbour information, wherein the centrality parameter is representative for an amount of influence the respective access point has within the plurality of access points. The partitioning apparatus further comprises a partitioning unit configured to partition the plurality of access points into a first management cluster and at least one further management cluster by forming the first management cluster by including in said first management cluster a first access point as primary member, said first access point having the highest centrality parameter from among the plurality of access points, and any neighbouring access point sensed by said first access point as secondary member; and by forming, for each further access point of the plurality of access points except the first access point, in order of descending centrality parameter, a further management cluster by including in said further management cluster said respective further access point as primary member and, as secondary member, any neighbouring access point sensed by said respective further access point which has not been included as secondary member in another management cluster.

It will be understood by the skilled person that the features and advantages disclosed hereinabove with respect to various embodiments of the partitioning method may also apply, *mutatis mutandis,* to various embodiments of the partitioning apparatus.

According to an embodiment the determining unit is configured to determine the centrality parameter by representing the plurality of access points as a graph, based on the obtained neighbour information, wherein each access point is represented by a vertex and wherein an edge between vertices represents that corresponding access points sense each other, and wherein the centrality parameter of an access point is representative for an amount of shortest paths running trough the vertex corresponding to said access point.

According to a preferred embodiment the information obtaining unit is configured to obtain from each access point within a formed management cluster activity information being representative for an amount of data consumption of said respective access point; the determining unit is configured to determine a management cluster activity level of said formed management cluster based on the obtained activity information; and the partitioning unit is configured to reform said formed management cluster when the management cluster activity level is higher than a first predetermined activity threshold.

According to an exemplary embodiment, the partitioning unit is configured to reform said formed management cluster by evicting at least one secondary member from said formed management cluster such that the cluster activity level of said reformed management cluster is equal to or below the first predetermined activity threshold, wherein the partitioning unit is configured to select the at least one secondary member based on neighbour information obtained from the primary member of said formed management cluster.

According to a further embodiment, the partitioning unit is configured to assign the at least one evicted secondary member to another formed cluster, wherein the at least one evicted secondary member is sensed by the primary member of the other formed cluster, and wherein the primary member of the reformed cluster has a higher centrality parameter as compared to the primary member of the other formed cluster.

According to an embodiment, wherein an access point is included as a primary member in a primary management cluster and as a secondary member in a secondary management cluster, the determining unit is configured to determine a combined activity level of the primary management cluster and the secondary management cluster based on the obtained activity information from each access point included in the primary and secondary management clusters. The partitioning unit is configured to assign the primary member and secondary members of the primary management cluster to the secondary management cluster if the combined activity level is below a second predetermined activity threshold; or to evict the primary member of the primary management cluster from the secondary management cluster if the combined activity level is equal to or higher than the second predetermined activity threshold.

According to a preferred embodiment, the partitioning apparatus further comprises a monitoring unit configured to monitor a state of the formed management clusters and to trigger the information obtaining unit, the determining unit and the partitioning unit at predetermined moments in time.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the partitioning method may also apply, *mutatis mutandis,* to embodiments of the computer program product.

Further aspects of the present invention are described by the dependent claims.

## Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figures 1A-1B schematically illustrate flowcharts of exemplary embodiments of a partitioning method according to the present invention;

Figure 2 schematically illustrates a graph representation of a plurality of wireless access points;

Figures 3A-3B schematically illustrate flowcharts of further exemplary embodiments of a partitioning method according to the present invention;

Figure 4 schematically illustrates a flowchart further specifying the embodiments of the partitioning method as illustrated in figures 3A and 3B;

Figure 5 schematically illustrates a flowchart of an alternative embodiment of a partitioning method according to the present invention;

Figures 6A-6C schematically illustrate a plurality of access points which have been partitioned in a plurality of management clusters;

Figure 7 schematically illustrates an exemplary embodiment of a partitioning method according to the present invention;

Figure 8 schematically illustrates an exemplary embodiment of a partitioning apparatus according to the present invention; and

Figure 9 schematically illustrates another exemplary embodiment of a partitioning apparatus according to the present invention.

Description of embodiments

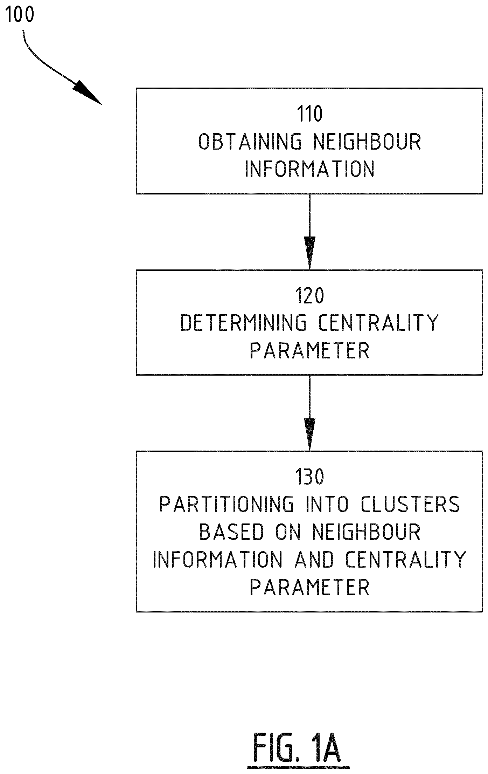

Figure 1A illustrates a partitioning method 100 for partitioning a plurality of wireless access points into a plurality of management clusters of access points, wherein each management cluster of the plurality of management clusters comprises at least one access point of the plurality of access points. The partitioning method 100 comprises a step 110 of obtaining from each access point of the plurality of access points neighbour information, the neighbour information comprising at least an access point identifiers (ID) of any neighbouring access point which is sensed by the respective access point; and a signal strength indicator corresponding to the sensed neighbouring access point. In other words, for a particular wireless access point it can be determined which access points of the plurality of access points are neighbouring access points of that particular access point and for each of those neighbouring access points it can be determined how strong its signal is perceived at that particular access point. Preferably the access points of the plurality of access points are managed by a managing operator and are provisioned by the TR-181 standard, such that data collection, preferably periodic data collection, is enabled. In an embodiment the neighbour information corresponds with obtaining from the access points the TR-181 parameter "Device.WiFi.NeighboringWiFiDiagnostic.Result.{i}.", which may be collected by each of the wireless access points by performing a Wi-Fi scan, and consequently be obtained from the access points by the managing operator. This way access point identifiers such as service set identifier (SSID) and/or basic service set identifier (BSSID), and signal strength indicators such as received signal strength indicator (RSSI) regarding neighbouring access points may be conveniently obtained.

The partitioning method 100 further comprises the step 120 of determining for each access point of the plurality of access points a centrality parameter based on the above described obtained neighbour information. The centrality parameter is a measure of the connectedness of an access point, or in other words the centrality parameter is representative for an amount of influence the respective access point has within the plurality of access points. As an illustrative example it is noted that the centrality parameter of an access point having a lot of neighbouring access points will typically have a larger centrality parameter as compared to an access point having no neighbouring access point. Although it is not just the amount of neighbouring access points which determines the centrality parameter, but also a more general "positioning" of an access point within the plurality of access points. The term positioning does not refer to the merely spatial location or position of an access point, but rather to how an access point is related to other access points within the plurality of access point. In this case, also a relation towards neighbouring access points of neighbouring access points may be taken into account to determine the centrality parameter.

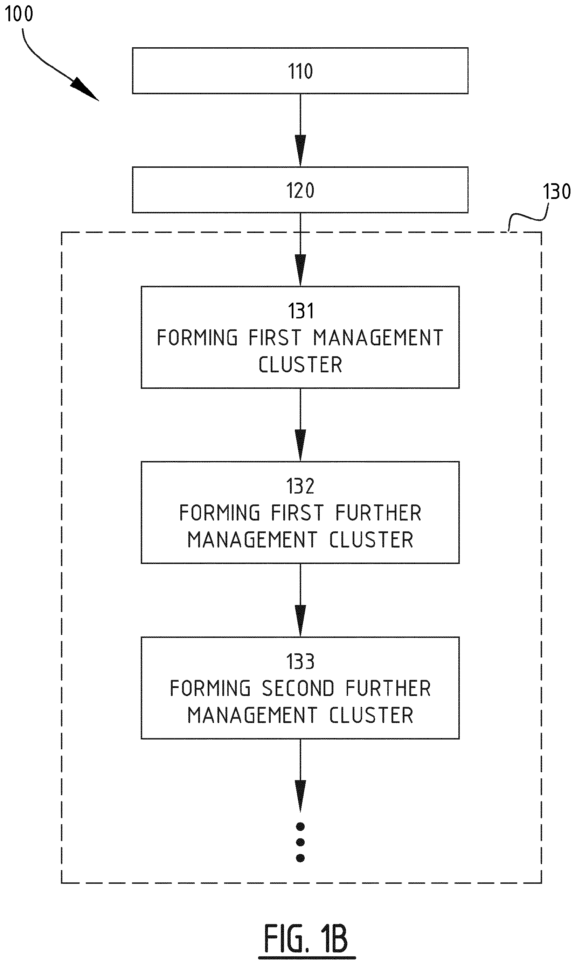

The partitioning method 100 further includes step 130 of partitioning the plurality of access points into management clusters or groups, based on both the obtained neighbour information and the determined centrality parameter. Step 130 is further specified in figure 1B by step 131 of forming a first management cluster, step 132 of forming a first further management cluster, and step 133 of forming a second further management cluster. Note that depending on the amount of access points comprised in the plurality of access points and the topology thereof either less or more further management clusters may be formed in a similar way. The term management cluster is used to describe a group of access points, wherein a management cluster has one central access point, also referred to as primary member of the management cluster, and one or more neighbouring access points, also referred to as secondary members of the management cluster. Taking this into account a management cluster can be said to be formed "around" a central access point functioning as primary member, wherein neighbouring access points of the central access point function as secondary members in the management cluster. In other words, each secondary member in a management cluster is a neighbouring access point of the primary member of that management cluster, i.e. each secondary member can be sensed by the primary member. As described earlier, for each access point of the plurality of access points a centrality parameter may be determined. In the following, for the sake of brevity, when the wording "centrality parameter" is used in connection with a management cluster, this is to be interpreted as the centrality parameter of the access point functioning as primary member of the management cluster.

Step 131 of forming the first management cluster may be performed by including in the first management cluster a first access point as primary member, said first access point having the highest centrality parameter from among the plurality of access points, and any neighbouring access point sensed by said first access point as secondary member. In other words, the first management cluster is formed around the access point with the highest centrality parameter, by including in the management cluster all neighbouring access points which are sensed by the access point having the highest centrality parameter. In this context, the wording "first access point" and "first management cluster" refer to the access point with the highest centrality parameter and to the corresponding management cluster wherein the first access point functions as primary member. Accordingly, the wording "further access point" and "further management cluster" refer to an access point not having the highest centrality parameter and to the corresponding management cluster wherein the further access point functions as primary member. Rank words or ordinals such as "first", "second", "third", ... may be added to the wordings "further access point" and "further management cluster" to indicate a mutual relation regarding centrality parameter, i.e. the first further access point has a centrality parameter value which is lower than the centrality parameter value of the first access point but higher than the centrality parameter value of the second further access point, and so on.

Steps 132 and 133 include, for each further access point of the plurality of access points except the first access point, in order of descending centrality parameter, forming a further management cluster by including in said further management cluster said respective further access point as primary member and, as secondary member, any neighbouring access point sensed by said respective further access point which has not been included as secondary member in another management cluster. More in particular, during step 132 a first further management cluster is formed around the first further access point, and all neighbouring access points which are sensed by the first further access point are included in the first further management cluster except for those neighbouring access points which are sensed by the first further access point but are already included in an earlier formed management cluster, in this particular case, in the first management cluster. In a similar way, during step 133 a second further management cluster is formed around the second further access point, and all neighbouring access points which are sensed by the second further access point are included in the second further management cluster except for those neighbouring access points which are sensed by the second further access point but are already included in an earlier formed management cluster, in this particular case, in the first management cluster or in the first further management cluster. Similar steps as 132 and 133 may be carried out for any other further access point included in the plurality of access points. This way a partitioning into management clusters is provided wherein each access point of the plurality of access points is either included in only one management cluster, or in two management clusters. The latter case may arise when a particular access points is included in one management cluster as a primary member, and in another management cluster as a secondary member. In other words, one access point can be both a central access point of one management cluster and a neighbouring access point of another management cluster.

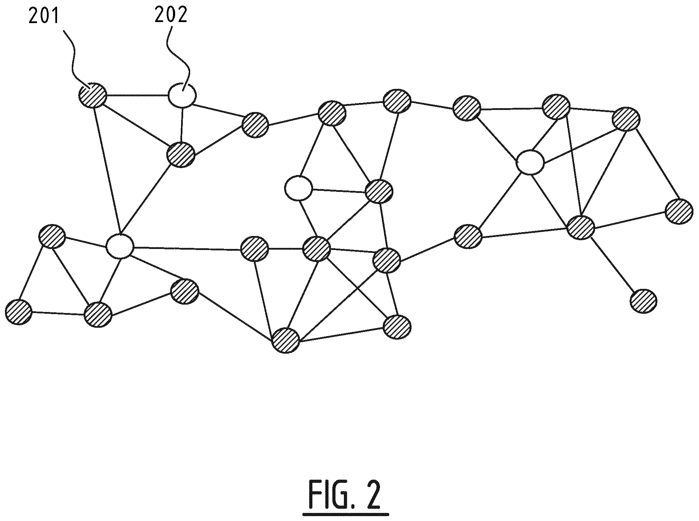

According to an embodiment, determining the centrality parameter comprises representing the plurality of access points as a graph, based on the obtained neighbour information, wherein each access point 201 is represented by a vertex or node and wherein an edge between vertices represents that corresponding access points sense each other. According to this embodiment the centrality parameter of an access point is representative for an amount of shortest paths running trough the vertex corresponding to the access point. Figure 2 schematically illustrates such a graph representation of a plurality of wireless access points. Access points 201 are access points which are managed by the managing operator, and access points 202 are so called alien access points which are not managed by the managing operator. The partitioning method according to the invention is based on a centrality parameter as described above. When the wireless access points are represented in a graph, the centrality parameter of an access point might correspond with a betweenness centrality (BC) of a vertex or node corresponding to the access point in the graph. Given a list of access points and the results of their Wi-Fi scans, i.e. obtained neighbour information, a graph can be created in which each access point is a vertex while edges between access point denote if the access points are connected, i.e. visible to each other in their Wi-Fi scan, as illustrated in figure 2. Most of the vertices 201 will be managed by the managing operator (full vertices), while other non-managed nodes are considered as alien access points 202 (outlined vertices). In partitioning access points into clusters, a first challenge is to determine what should be the starting point, or more in particular the central access point or vertex, for each cluster. To address this challenge, the betweenness centrality of the nodes in the graph may be calculated and be sorted in descending order, wherein the node having the highest BC comes first. Betweenness centrality is the measure of the connectedness of a node. For every pair of vertices in a connected graph, there exists at least one shortest path between the vertices such that the number of edges that the path passes through is minimized. The betweenness centrality for each vertex is the number of these shortest paths that pass through the vertex. In conclusion the betweenness centrality is a measure of the number of shortest paths that pass through a given vertex and therefore is representative for an influence the corresponding access point has within the plurality of access points.

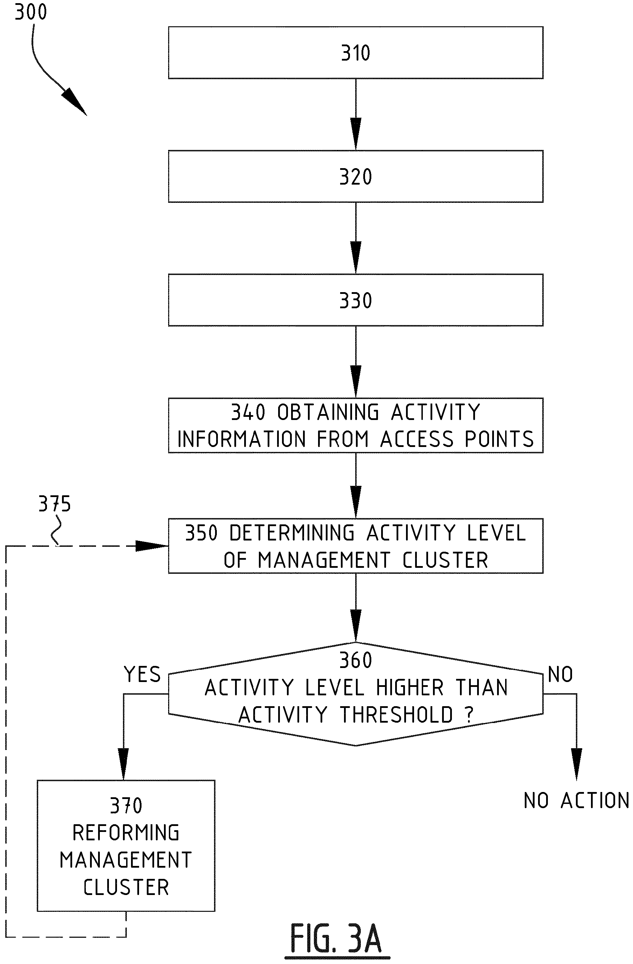

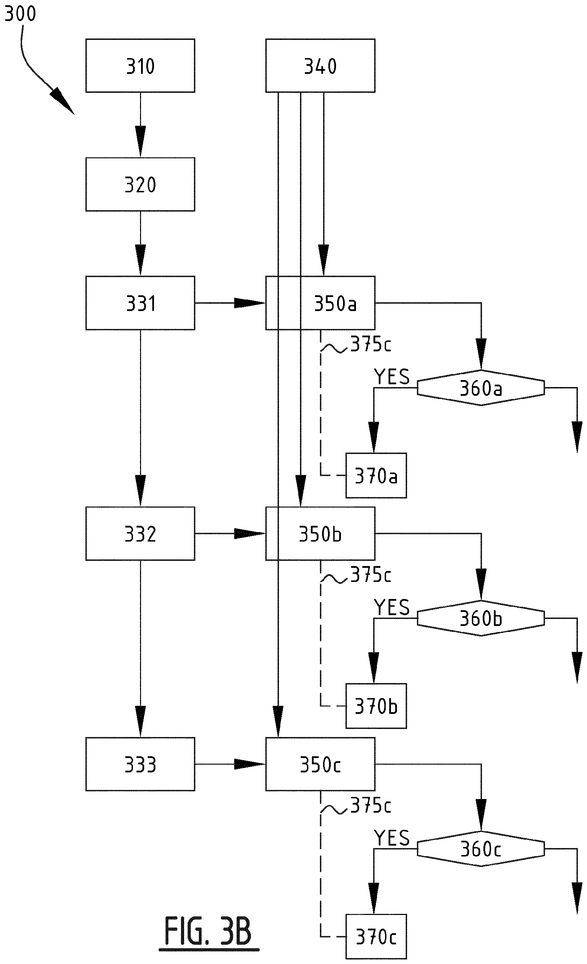

Figures 3A and 3B schematically illustrate flowcharts of further exemplary embodiments of a partitioning method according to the present invention which include the step 340 of obtaining from the access points activity information being representative for an amount of data consumption of said respective access point. As illustrated in figure 3A this step can be executed after all management clusters have been formed in step 330. In such an embodiment, activity information may be obtained at that point from each access point within a formed management cluster to determine an activity level of that management cluster in step 350, or alternatively activity information may have been obtained earlier, e.g. along with step 310 of obtaining neighbour information of the access points, temporarily stored and then retrieved for the access points which have been included in the management cluster for which the activity level will be determined during step 350. In figure 3B an alternative embodiment is illustrated, wherein the activity information is obtained during step 340, at an early stage, and wherein after formation of the first management cluster during step 331, the activity level of the first management cluster is determined during step 350a. This is different from the embodiment as illustrated in figure 3A wherein activity levels are only determined after all management clusters have been formed, whereas in figure 3B the activity level of a management cluster is determined directly after formation of the respective management cluster. This is illustrated by steps 331 and 350a, respectively corresponding with the formation and activity level determination of the first management cluster, by steps 332 and 350a, respectively corresponding with the formation and activity level determination of the first further management cluster, and by steps 333 and 350c, respectively corresponding with the formation and activity level determination of the second further management cluster.

The partitioning method according to figures 3A and 3B further comprises step 350, 350a, 350b, 350c of determining a management cluster activity level of the formed management cluster based on the obtained activity information. The activity information of an access point may correspond to an amount of data consumption of the access point and/or correspond with an amount of data traffic passing through the access point. When the access points are provisioned by the TR-181 standard, useful TR-181 parameters corresponding to activity information may be "Device.WiFi.Radio.{i}.Stats.BytesSent" and "Device.WiFi.Radio.{i}.Stats.BytesReceived".

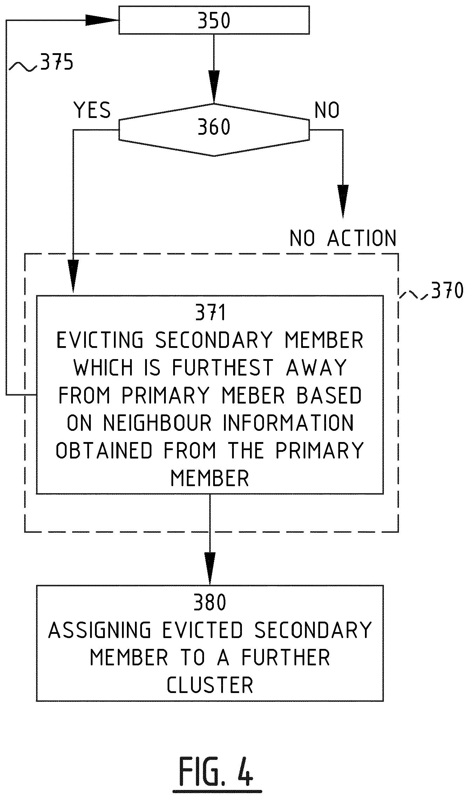

The illustrated embodiment in figures 3A and 3B further include comparing the determined activity level with a predefined activity threshold at step 360, 360a, 360b, 360c and reforming the formed management cluster when the management cluster activity level is higher than the predetermined activity threshold at step 370, 370a, 370b, 370c. If the determined activity level of the management cluster is equal to or lower than the predetermined activity threshold no action should be taken. It is clear for the skilled person that an activity level of a management cluster may be determined based on the obtained activity information of each access point within the management cluster. When the activity information is for example an amount of data traffic per access point, the activity level of a management cluster may be determined by adding up the amounts of data traffic from each access point within the management cluster. Dotted arrows 375, 375a, 375b, 375c illustrate that after reforming a management cluster during step 370, 370a, 370b, 370c, the activity level of the reformed management cluster may be determined again during step 350, 350a, 350b, 350c and compared to the predetermined activity threshold during step 360, 360a, 360b, 360c to create a feedback loop. Step 370, 370a, 370b, 370c of reforming the management cluster will be further elaborated below in connection to figure 4.

Figure 4 schematically illustrates an embodiment of the partitioning method according to the invention wherein reforming 370 said formed management cluster comprises evicting 371 at least one secondary member from said formed management cluster such that the cluster activity level of said reformed management cluster is equal or below the first predetermined activity threshold. The at least one secondary member which gets evicted is selected based on neighbour information obtained from the primary member of formed management cluster. More in particular, it is the secondary member which is considered to be "furthest" away from the primary member of the formed management cluster in terms of signal strength that gets evicted.

The embodiment of figure 4 further comprises step 380 of assigning the at least one evicted secondary member to a further management cluster, wherein the at least one evicted secondary member is sensed by the primary member of the further management cluster, and wherein the primary member of the reformed management cluster has a higher centrality parameter as compared to the primary member of the further management cluster. In other words, the evicted secondary member may be included into a further management cluster having a lower centrality parameter value as compared to the management cluster it was evicted from.

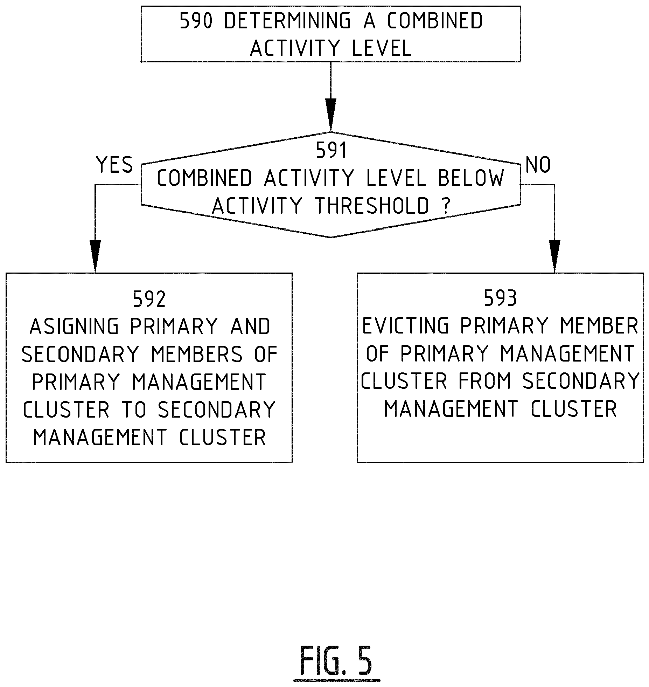

When executing one of the partitioning methods as described in connection with the flow charts of figures 1 to 4, it may arise that an access point is included into two management clusters. If this is the case, the embodiment according to figure 5 may be applied. Figure 5 schematically illustrates an alternative embodiment of a partitioning method according to the present invention wherein an access point is included as a primary member in a primary management cluster and as a secondary member in a secondary management cluster. The wording primary management cluster is used here to indicate that the access point is included in that particular management cluster as central access point, i.e. primary member. The wording secondary management cluster is used here to indicate that the access point is included in that particular management cluster as a neighbouring access point, i.e. secondary member. The partitioning method includes step 590 of determining a combined activity level of the primary management cluster and the secondary management cluster. This can be done based on the obtained activity information from each access point included in the primary and secondary management clusters. In step 591 the combined activity level is compared with a predetermined activity threshold. This activity threshold may or may not be the same as the earlier mentioned activity threshold with reference to steps 360, 360a, 360b, 360c in figures 3A, 3B and 4. If the combined activity level is below the predetermined activity threshold, the primary management cluster may be merged with the secondary management cluster by assigning the primary member and secondary members of the primary management cluster to the secondary management cluster. However, if the combined activity level is equal to or higher than the predetermined activity threshold the primary member of the primary management cluster is evicted from the secondary management cluster.

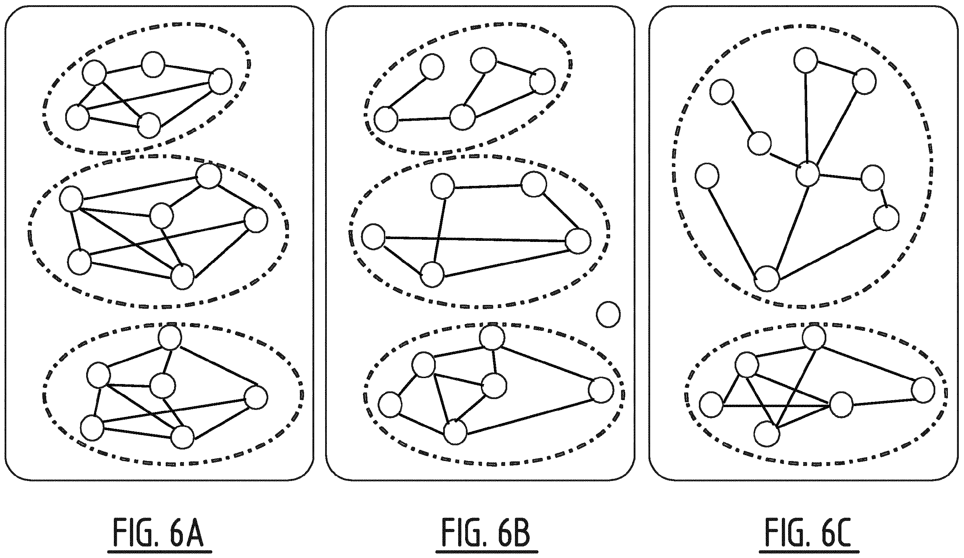

The method of figure 5 as described above, in combination with any one of the partitioning methods as described earlier, results in a partitioning of access points wherein each access point belongs to one management cluster, either as a primary member or as a secondary member. Figures 6A-6C schematically illustrate examples of such network partitioning results. More in particular, figure 6A illustrates a network partitioning wherein all access points have been partitioned into three management clusters and wherein no overlap exists between the formed management clusters. Figure 6B illustrates a similar partitioning result wherein all access points but one have been included in one of three management clusters. However, the single access point may be considered as forming a management cluster on its own. Alternatively, the single access point may be incorporated in one of the three formed management clusters. Figure 6C illustrates a network partitioning result wherein all access points have been incorporated into two management clusters without any overlap arising between the two management clusters.

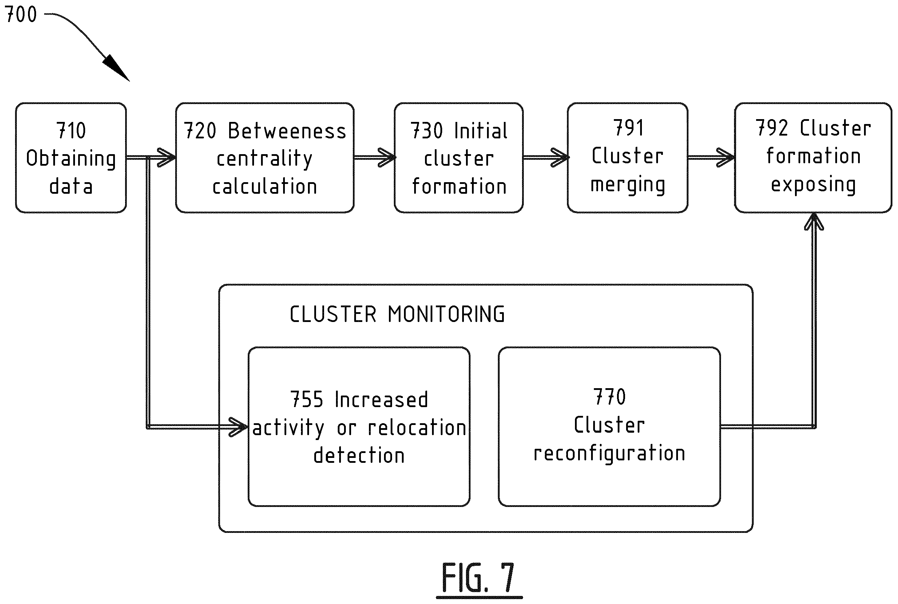

Figure 7 schematically illustrates an exemplary embodiment of a partitioning method according to the present invention. As earlier described, the idea of embodiments of the invention is to derive management clusters or cliques of managed access points such that access points belonging to the same management cluster have a high mutual dependency, whereas the access points from different clusters have negligible mutual dependency. This way of forming management clusters would solve issues regarding coverage overlapping, and consequently problems of contention and interference. Further to this, embodiments of the partitioning method according to the invention are concerned with the monitoring, preferably online monitoring of the management cluster formation such that after a first step of initial clustering, events such as newly installed access points, intensified activity levels, and/or relocated access points can be taken into account and management clusters can be reformed or reconfigured accordingly.

As described in connection to figure 2 the concept of betweenness centrality (BC) is used in embodiments of the partitioning method wherein the access points are represented as vertices on a graph. More in particular the BC is a useful parameter to determine a starting point, or starting access point for management cluster formation as will be described below with regard to the embodiment of the partitioning method as illustrated in figure 7. In summary, the exemplary embodiment of figure 7 comprises the following steps:

step 710 of data collection;
step 720 of betweenness centrality calculation;
step 730 of initial management cluster formation;
step 791 of management cluster merging;
step 792 of management cluster formation exposing; and
steps 755 and 770 of management cluster monitoring.

This sequence of steps allows for management clusters to be formed and to be monitored after formation. Each step will be further elaborated below.

During step 710, data is collected or obtained from all access points which are managed by the managing operator. The type of data that is being collected may include, but is not limited to the following exemplary TR-181 parameters regarding activity information: "Device.WiFi.Radio.{i}.Stats.BytesSent" and "Device.WiFi.Radio.{i}.Stats.BytesReceived", and regarding neighbour information: "Device.WiFi.NeighboringWiFiDiagnostic.Result.{i}.".

During step 720, using neighboring Wi-Fi statistics, for each of the vertices, i.e. Wi-Fi access points, the betweenness centrality is calculated. Given a list of access points and the result of their Wi-Fi scans, a graph can be created in which each access point is a vertex while edges between access points denote that they are connected, i.e. visible to each other via their Wi-Fi scan. Once the graph has been created, the betweenness centrality (BC) of each node and corresponding access point can be calculated, using the following formula for BC. Betweenness centrality of a vertex or node *v* is the sum of the fraction of all-pairs shortest paths that pass through *v*:

$$c_B(v) = \sum_{s,t \in V} \frac{\sigma(s,t|v)}{\sigma(s,t)}$$

wherein *V* is the set of nodes, $\sigma(s,t)$ is the number of shortest $(s,t)$-paths, and $\sigma(s,t|v)$ is the number of those paths passing through some node *v* other than *s,t*.

If $s = t$, then $\sigma(s,t) = 1$, and if $v \in s,t$, then $\sigma(s,t|v) = 0$.

This way, betweenness centrality is considered to be a measure of the connectedness of a node. The BC measure of the nodes in the graph provides a starting point to form initial management clusters.

During step 730, initial management cluster formation is performed based on the obtained neighbour information, i.e. via a Wi-Fi scan, and on the determined centrality parameter, i.e. the BC metric as calculated in step 720. Initial cluster formation comprising following substeps;

I. Listing the nodes in descending order with respect to their BC. Denote this list as **C**
II. Looping iteratively through each node **I** in **C.**
III. Recording all neighbours of the node **I.** Denote the neighbours as N{**I**}.
IV. Looping iteratively through each neighbor $\mathbf{n^i}$, in N{**I**};

V. IF $\mathbf{n^i}$ is not in some existing managing cluster C{**I'**}, adding $\mathbf{n}^i$ to cluster C{**I**}. This condition is automatically fulfilled for the first node I in the list C, i.e. the node or access point with the highest BC.

Step 730 will result in a list of initial management clusters with high BC nodes as their centroid/center, i.e. primary member. In addition, some nodes might be the center of a management cluster themselves and also belong, as secondary member, to another management cluster with a different primary member.

In step 791, management cluster merging is performed. This step describes how to handle a node **J,** being the primary member of management cluster C{J} but also a secondary member of the management cluster C{I}. As described earlier in connection to figure 5 and step 591 two options are possible:

- option 592 of moving the node **J** and all of the nodes in C{J} to C{I}, thereby effectively merging management clusters C{I} and C{J}, and consequently removing C{J}; or
- option 593 of removing the node **J** from C{I} and keep it in place in C{J}.

A preferred criteria upon which to decide which option to select and whether or not to merge clusters is the activity level or activity index. The activity level is determined by data traffic within the respective management cluster. Assume for example that a predefined activity threshold is given by **A.** If by adding **J** and all of the nodes of cluster C{J} to cluster C{I}, the overall activity level of cluster C{I} given by A{I} does not exceed **A,** then it is safe to merge them.

It is clear to the skilled person that, as per step 730 of initial clustering, it is not feasible that any given node can belong to two clusters without being the center of either one of them. In the following, the options 592 and 593 as introduced earlier are described in more detail.

I. Determining the list of nodes that belong to more than one cluster. Denote the list as T;

II. Looping iteratively through the list T:

(i) Each node $T^j$ in T, belongs to a cluster C{J}, of which it is the center, and a cluster C{I}, of which it is not the center;

(ii) If the sum of activity levels of C{ J} and C{I} is below a given activity threshold level **A,** i.e.(A{J} + A{I} < **A**) assign all members of cluster C{J} to cluster C{I}, and remove cluster C{J} (option 592);

(iii) Otherwise, exclude the node J from cluster C{I} (option 593).

This approach will result in a list of clusters whose members do not belong to more than one cluster as illustrated in figures 6A-6C..

In step 792 of cluster formation exposing a set of determined management clusters may be made available to an optimization engine for further management on network, access point and/or cluster level.

In steps 755 and 770, the wireless access points within the network are being monitored with respect to the cluster formation as carried trough during steps 730 and 791. A cluster reconfiguration according to step 770 may be triggered in two cases according to step 755. According to a first case a change of activity level of a management cluster may arise, and according to a second case, a change of location of a node in a management cluster may arise. In the following, either case is considered.

In the first case that the activity level A{K} of a management cluster C{K} exceeds the threshold **A,** a cluster reconfiguration or reformation may be triggered. Depending on particular monitor requirements, the activity level needs to exceed the threshold **A** continuously for a longer period of time, or just once to trigger the cluster reconfiguration. It is clear to the skilled person that any other monitoring requirement may be implemented in a similar way. Reconfiguration includes decomposing the management cluster C{K} into at least two management clusters. If the management cluster C{K} was made by merging the original clusters C{K} and C{L} in accordance with step 791, then the solution would be to revert to the original cluster formation. If the cluster C{K} was not formed by merging, the following sequence of steps are executed:

I. Selecting the cluster C{K} with center node **K,** where A{K} > **A;**

II. Starting evicting nodes in C{K} farthest away from **K,** in terms of signal strength (dBm), till the activilty level of A{K} goes below **A;**

III. For all nodes evicted from C{K}, assigning them to any cluster C{K+1},...,C{K+N} to whose center they are visible. Precisely, each evicted node can be assigned to any cluster C{K+1},...,C{K+N}, if it is a neighbour of the center node of these clusters, where (**K+1**),...,(**K+N**) denote the clusters whose centers have lower BC than **K.**

It is clear to the skilled person that the evicted nodes undergoing reassignment could not possibly have initially gone to clusters C{K+1},...,C{K+N} because of the way the initial clustering according to step 730 has been designed, more in particular see substep V.

In case that there is a change in location of one or more access points, cluster reconfiguration has to be triggered. Such cluster reconfiguration based on location change, can be accomplished straightforwardly by assigning the access point which has changed location to the cluster whose center is closest to the new location of the relocated node. In this process, preferably the earlier described limitation regarding activity levels of management clusters must be satisfied.

However, if the relocated node was itself a cluster center, a further step should be undertaken since the nodes belonging to that so called "stranded cluster" need to be revisited. A management cluster whose center, or primary member has changed locations is referred to as "stranded cluster". The following sequence of steps describes an embodiment to cope with stranded clusters;

I. For a stranded cluster C{S}, sorting all the nodes in descending values of BC;

II. Applying the initial clustering algorithm of step 730 described above to all those nodes. This will cause new clusters to emerge;

III. If there are any nodes that are left unassigned after Step II, then for those nodes, follow the step exactly similar to the step III of the algorithm described in the case of reconfiguring clusters when activity levels exceed the activity threshold. As per that step, **J** would be the node that has changed it location and C{J} would be the stranded cluster.

Note that steps 710, 720, 730, 791 and 792 can be repeated periodically, while the monitoring unit for detecting the change in activity level and/or access point location within step 755 of online cluster monitoring triggers cluster reconfiguration when needed.

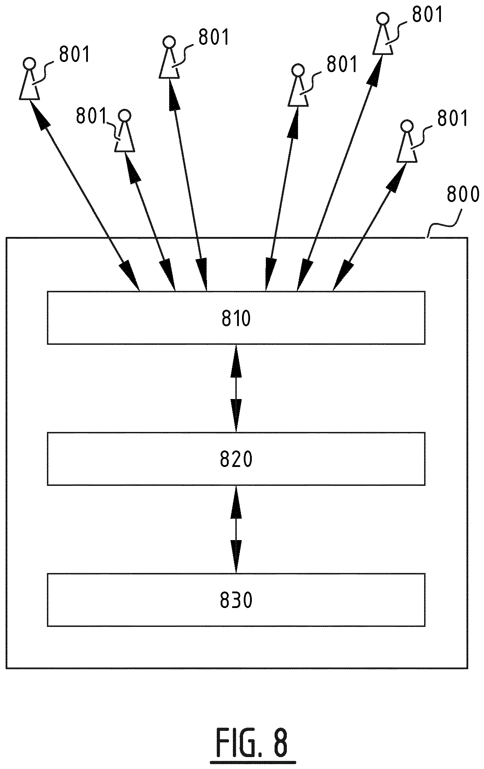

Figure 8 schematically illustrates an exemplary embodiment of a partitioning apparatus 800 for partitioning a plurality of wireless access points 801 into a plurality of management clusters of access points 801, wherein each management cluster of the plurality of management clusters comprises at least one access point 801 of the plurality of access points. The partitioning apparatus comprises an information obtaining unit 810 configured to obtain from each access point 801 of the plurality of access points neighbour information. The neighbour information comprising at least an access point identifier of each neighbouring access point which is sensed by said respective access point; and a signal strength indicator corresponding to said sensed neighbouring access point. The partitioning apparatus 800 further comprises a determining unit 820 configured to determine for each access point 801 of the plurality of access points a centrality parameter based on the obtained neighbour information. The centrality parameter is representative for an amount of influence the respective access point has within the plurality of access points. The partitioning apparatus further comprises a partitioning unit 830 configured to partition the plurality of access points 801 into a first management cluster and at least one further management cluster. To achieve this, the partitioning unit 830 is configured form the first management cluster by including in said first management cluster a first access point as primary member. The first access point is selected as having the highest centrality parameter from among the plurality of access points 801. In addition to the first access point any neighbouring access point sensed by said first access point is included in the first management cluster as a secondary member. The partitioning unit 830 is further configured to, for each further access point of the plurality of access points 801 except the first access point, in order of descending centrality parameter, form a further management cluster by including in said further management cluster said respective further access point as primary member and, as secondary member, any neighbouring access point sensed by said respective further access point which has not been included as secondary member in another management cluster.

Preferably the determining unit 820 is configured to determine the centrality parameter by representing the plurality of access points as a graph, based on the obtained neighbour information, wherein each access point is represented by a vertex and wherein an edge between vertices represents that corresponding access points sense each other. The centrality parameter of an access point is representative for an amount of shortest paths running trough the vertex corresponding to said access point.

Preferably, the information obtaining unit 810 is configured to obtain from each access point within a formed management cluster activity information being representative for an amount of data consumption of said respective access point. In such an embodiment, the determining unit 820 is configured to determine a management cluster activity level of said formed management cluster based on the obtained activity information, and the partitioning unit 830 is configured to reform said formed management cluster when the management cluster activity level is higher than a first predetermined activity threshold.

Preferably, the partitioning unit 830 is configured to reform said formed management cluster by evicting at least one secondary member from said formed management cluster such that the cluster activity level of said reformed management cluster is equal or below the first predetermined activity threshold, wherein the partitioning unit is configured to select the at least one secondary member based on neighbour information obtained from the primary member of said formed management cluster.

Preferably, the partitioning unit is configured to assign the at least one evicted secondary member to another formed cluster, wherein the at least one evicted secondary member is sensed by the primary member of the other formed cluster, and wherein the primary member of the reformed cluster has a higher centrality parameter as compared to the primary member of the other formed cluster.

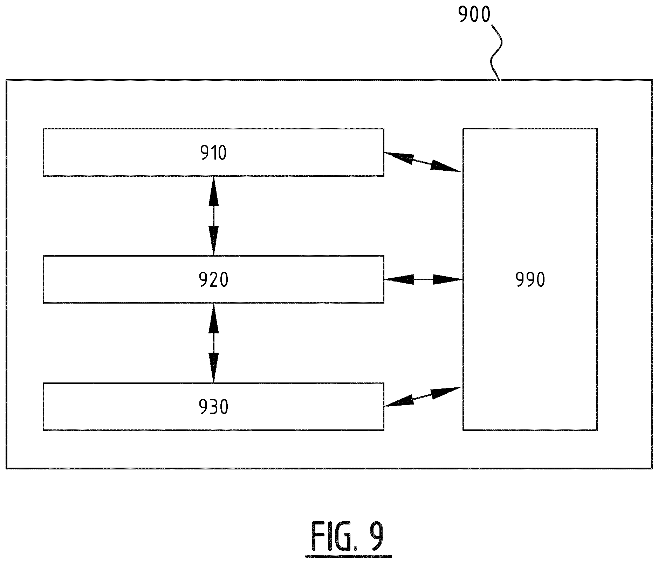

Figure 9 schematically illustrates another exemplary embodiment of a partitioning apparatus 900 according to the present invention further comprising a monitoring unit 990 configured to monitor a state of the formed management clusters and to trigger the information obtaining unit 810, 910, the determining unit 820, 920 and the partitioning unit 830, 930 at predetermined moments in time.

A benefit of embodiments of the partitioning method and apparatus according to the invention is in its ability to partition the network into clusters of managed access points which can be optimized independently. The level of correlation between any two access points belonging to different management clusters is minimal or non-existing.

Embodiments of the partitioning method and apparatus according to the invention exploit neighboring Wi-Fi scan data, thereby creating Wi-Fi landscape maps, i.e. network graph, as an input for the partitioning method and apparatus. Embodiment of the partitioning method are able to take into account new managed or non-managed access point, as well as an eventual relocation of an access point and accordingly adapt and/or reform management clusters. Furthermore, embodiments of the partitioning method and apparatus take into accounts the activity and demand of an access point, when assigning the respective access point to a particular management cluster.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions.

The functions of the various elements shown in the figures, including any functional blocks labelled as "processors" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

**1.** A partitioning method for partitioning a plurality of wireless access points into a plurality of management clusters of access points, wherein each management cluster of the plurality of management clusters comprises at least one access point of the plurality of access points, the partitioning method comprising:

- obtaining from each access point of the plurality of access points neighbour information comprising at least:
  - an access point identifier of each neighbouring access point which is sensed by said respective access point; and
  - a signal strength indicator corresponding to said sensed neighbouring access point;
- determining for each access point of the plurality of access points a centrality parameter based on the obtained neighbour information, wherein the centrality parameter is representative for an amount of influence the respective access point has within the plurality of access points; and
- partitioning the plurality of access points into a first management cluster and at least one further management cluster by:
  - forming the first management cluster by including in said first management cluster a first access point as primary member, said first access point having the highest centrality parameter from among the plurality of access points, and any neighbouring access point sensed by said first access point as secondary member; and
  - for each further access point of the plurality of access points except the first access point, in order of descending centrality parameter, forming a further management cluster by including in said further management cluster said respective further access point as primary member and, as secondary member, any neighbouring access point sensed by said respective further access point which has not been included as secondary member in another management cluster.

**2.** The partitioning method according to claim 1, wherein determining the centrality parameter comprises representing the plurality of access points as a graph, based on the obtained neighbour information, wherein each access point is represented by a vertex and wherein an edge between vertices represents that corresponding access points sense each other, and wherein the centrality parameter of an access point is representative for an amount of shortest paths running trough the vertex corresponding to said access point.

**3.** The partitioning method according to claim 1 or 2 further comprising:

- obtaining from each access point within a formed management cluster activity information being representative for an amount of data consumption of said respective access point; and
- determining a management cluster activity level of said formed management cluster based on the obtained activity information; and
- reforming said formed management cluster when the management cluster activity level is higher than a first predetermined activity threshold.

**4.** The partitioning method according to claim 3, wherein reforming said formed management cluster comprises evicting at least one secondary member from said formed management cluster such that the cluster activity level of said reformed management cluster is equal or below the first predetermined activity threshold, wherein said at least one secondary member is selected based on neighbour information obtained from the primary member of said formed management cluster.

**5.** The partitioning method according to claim 4 further comprising assigning the at least one evicted secondary member to another formed cluster, wherein the at least one evicted secondary member is sensed by the primary member of the other formed cluster, and wherein the primary member of the reformed cluster has a higher centrality parameter as compared to the primary member of the other formed cluster.

**6.** The partitioning method according to any one of the preceding claims 3 to 5, wherein an access point is included as a primary member in a primary management cluster and as a secondary member in a secondary management cluster, the method comprising:

- determining a combined activity level of the primary management cluster and the secondary management cluster based on the obtained activity information from each access point included in the primary and secondary management clusters; and
- if the combined activity level is below a second predetermined activity threshold:

- assigning the primary member and secondary members of the primary management cluster to the secondary management cluster; or

- if the combined activity level is equal to or higher than the second predetermined activity threshold:

- evicting the primary member of the primary management cluster from the secondary management cluster.

**7.** The partitioning method according to any one of the preceding claims 3 to 6, wherein the steps of obtaining activity information, determining the management cluster activity level and reforming the formed management cluster are executed periodically.

**8.** A partitioning apparatus for partitioning a plurality of wireless access points into a plurality of management clusters of access points, wherein each management cluster of the plurality of management clusters comprises at least one access point of the plurality of access points, the partitioning apparatus comprising:

- an information obtaining unit configured to obtain from each access point of the plurality of access points neighbour information comprising at least:

- an access point identifier of each neighbouring access point which is sensed by said respective access point; and
- a signal strength indicator corresponding to said sensed neighbouring access point;

- a determining unit configured to determine for each access point of the plurality of access points a centrality parameter based on the obtained neighbour information, wherein the centrality parameter is representative for an amount of influence the respective access point has within the plurality of access points; and
- a partitioning unit configured to partition the plurality of access points into a first management cluster and at least one further management cluster and configured to:

- form the first management cluster by including in said first management cluster a first access point as primary member, said first access point having the highest centrality parameter from among the plurality of access points, and any neighbouring access point sensed by said first access point as secondary member; and
- for each further access point of the plurality of access points except the first access point, in order of descending centrality parameter, form a further management cluster by including in said further management cluster said respective further access point as primary member and, as secondary member, any neighbouring access point sensed by said respective further access point which has not been included as secondary member in another management cluster.

**9.** The partitioning apparatus according to claim 8, wherein the determining unit is configured to determine the centrality parameter by representing the plurality of access points as a graph, based on the obtained neighbour information, wherein each access point is represented by a vertex and wherein an edge between vertices represents that corresponding access points sense each other, and wherein the centrality parameter of an access point is representative for an amount of shortest paths running trough the vertex corresponding to said access point.

**10.** The partitioning apparatus according to claim 8 or 9, wherein

- the information obtaining unit is configured to obtain from each access point within a formed management cluster activity information being representative for an amount of data consumption of said respective access point;
- the determining unit is configured to determine a management cluster activity level of said formed management cluster based on the obtained activity information; and
- the partitioning unit is configured to reform said formed management cluster when the management cluster activity level is higher than a first predetermined activity threshold.

**11.** The partitioning apparatus according to claim 10, wherein the partitioning unit is configured to reform said formed management cluster by evicting at least one secondary member from said formed management cluster such that the cluster activity level of said reformed management cluster is equal or below the first predetermined activity threshold, wherein the partitioning unit is configured to select the at least one secondary member based on neighbour information obtained from the primary member of said formed management cluster.

**12.** The partitioning apparatus according to claim 11, wherein the partitioning unit is configured to assign the at least one evicted secondary member to another formed cluster, wherein the at least one evicted secondary member is sensed by the primary member of the other formed cluster, and wherein the primary member of the reformed cluster has a higher centrality parameter as compared to the primary member of the other formed cluster.

**13.** The partitioning apparatus according to any one of the preceding claims 10 to 12, wherein an access point is included as a primary member in a primary management cluster and as a secondary member in a secondary management cluster, the determining unit being configured to:

- determine a combined activity level of the primary management cluster and the secondary management cluster based on the obtained activity information from each access point included in the primary and secondary management clusters; and wherein the partitioning unit is configured to:

  - assign the primary member and secondary members of the primary management cluster to the secondary management cluster if the combined activity level is below a second predetermined activity threshold; or
  - evict the primary member of the primary management cluster from the secondary management cluster if the combined activity level is equal to or higher than the second predetermined activity threshold.

**14.** The partitioning apparatus according to any one of the preceding claims 10 to 13 further comprising a monitoring unit configured to monitor a state of the formed management clusters and to trigger the information obtaining unit, the determining unit and the partitioning unit at predetermined moments in time.

**15.** A computer program product comprising a computer-executable program of instructions for performing, when executed on a computer, the steps of the method according to any one of claims 1 to 7.

## Patentansprüche

**1.** Aufteilungsverfahren zur Aufteilung einer Mehrzahl von drahtlosen Zugangspunkten in eine Mehrzahl von Verwaltungsclustern von Zugangspunkten, wobei jeder Verwaltungscluster der Mehrzahl von Verwaltungsclustern mindestens einen Zugangspunkt der Mehrzahl von Zugangspunkten umfasst, wobei das Aufteilungsverfahren umfasst:

- Einholen von Nachbarinformationen von jedem Zugangspunkt der Mehrzahl von Zugangspunkten, die wenigstens Folgendes umfassen:

  - eine Zugangspunktkennung jedes benachbarten Zugangspunkts, der vom jeweiligen Zugangspunkt erfasst wird; und
  - einen Signalstärkeindikator, der dem erfassten benachbarten Zugangspunkt entspricht;

- Bestimmen eines Zentralitätsparameters für jeden Zugangspunkt der Mehrzahl von Zugangspunkten basierend auf den eingeholten Nachbarinformationen, wobei der Zentralitätsparameter ein Ausmaß an Einfluss darstellt, das der jeweilige Zugangspunkt innerhalb der Mehrzahl von Zugangspunkten aufweist; und
- Aufteilen der Mehrzahl von Zugangspunkten in einen ersten Verwaltungscluster und mindestens einen weiteren Verwaltungscluster durch:

  - Bilden des ersten Verwaltungsclusters durch Einbeziehen eines ersten Zugangspunkts als primäres Mitglied, wobei der erste Zugangspunkt den höchsten Zentralitätsparameter unter der Mehrzahl von Zugangspunkt aufweist, und jedes benachbarten Zugangspunkts, der vom ersten Zugangspunkt erfasst wird, als sekundäres Mitglied in den ersten Verwaltungscluster; und
  - Bilden für jeden weiteren Zugangspunkt der Mehrzahl von Zugangspunkten mit Ausnahme des ersten Zugangspunkts in absteigender Zentralitätsparameterreihenfolge eines weiteren Verwaltungsclusters durch Einbeziehen des jeweiligen weiteren Zugangspunkts als primäres Mitglied und jedes benachbarten Zugangspunkts, der vom jeweiligen weiteren Zugangspunkt erfasst wird und der in keinem anderen Verwaltungscluster als sekundäres Mitglied einbezogen wurde, als sekundäres Mitglied in den weiteren Veraltungscluster.

**2.** Aufteilungsverfahren nach Anspruch 1, wobei das Bestimmen des Zentralitätsparameters ein Darstellen der Mehrzahl von Zugangspunkten als Graphen basierend auf den eingeholten Nachbarinformationen umfasst, wobei jeder Zugangspunkt durch einen Eckpunkt dargestellt wird, und wobei jede Kante zwischen Eckpunkten darstellt, dass entsprechende Zugangspunkte einander erfassen, und wobei der Zentralitätsparameter eines Zugangspunkts eine Menge von kürzesten Pfaden darstellt, die durch den Eckpunkt verlaufen, der dem Zugangspunkt entspricht.

**3.** Aufteilungsverfahren nach Anspruch 1 oder 2, ferner umfassend:

- Einholen von Aktivitätsinformationen, die eine Datenverbrauchsmenge des jeweiligen Zugangspunkt darstellen, von jedem Zugangspunkt innerhalb eines gebildeten Verwaltungsclusters;
- Bestimmen eines Verwaltungscluster-Aktivitätsgrades des gebildeten Verwaltungsclusters basierend auf den eingeholten Aktivitätsinformationen; und
- Umbilden des gebildeten Verwaltungsclusters, wenn der Verwaltungscluster-Aktivitätsgrad höher als eine erste vorbestimmte Aktivitätsschwelle ist.

**4.** Aufteilungsverfahren nach Anspruch 3, wobei das Umbilden des gebildeten Verwaltungsclusters ein Entfernen mindestens eines sekundären Mitglieds aus dem gebildeten Verwaltungscluster umfasst, derart dass der Cluster-Aktivitätsgrad des umgebildeten Verwaltungsclusters gleich oder unter der ersten vorbestimmten Aktivitätsschwelle ist, wobei das mindestens eine sekundäre Mitglied basierend auf Nachbarinformationen ausgewählt wird, die vom primären Mitglied des gebildeten Verwaltungsclusters eingeholt werden.

**5.** Aufteilungsverfahren nach Anspruch 4, ferner umfassend ein Zuordnen des mindestens einen entfernten sekundären Mitglieds zu einem anderen gebildeten Cluster, wobei das mindestens eine entfernte sekundäre Mitglied durch das primäre Mitglied des anderen gebildeten Clusters erfasst wird, und wobei das primäre Mitglied des umgebildeten Clusters einen höheren Zentralitätsparameter als das primäre Mitglied des anderen gebildeten Clusters aufweist.

**6.** Aufteilungsverfahren nach einem der Ansprüche 3 bis 5, wobei ein Zugangspunkt als primäres Mitglied in einen primären Verwaltungscluster und als sekundäres Mitglied in einen sekundären Verwaltungscluster einbezogen wird, wobei das Verfahren umfasst:

- Bestimmen eines kombinierten Aktivitätsgrades des primären Verwaltungsclusters und des sekundären Verwaltungsclusters basierend auf den eingeholten Aktivitätsinformationen von jedem Zugangspunkt, der im primären und im sekundären Verwaltungscluster enthalten ist; und
- wenn der kombinierte Aktivitätsgrad unter einer zweiten vorbestimmten Aktivitätsschwelle ist:

    - Zuordnen des primären Mitglieds und der sekundären Mitglieder des primären Verwaltungsclusters zum sekundären Verwaltungscluster; oder

- wenn der kombinierte Aktivitätsgrad gleich oder über der zweiten vorbestimmten Aktivitätsschwelle ist:

    - Entfernen des primären Mitglieds des primären Verwaltungsclusters aus dem sekundären Verwaltungscluster.

**7.** Austeilungsverfahren nach einem der Ansprüche 3 bis 6, wobei die Schritte des Einholens von Informationen, Bestimmens des Verwaltungscluster-Aktivitätsgrades und Umbildens des gebildeten Verwaltungsclusters periodisch ausgeführt werden.

**8.** Aufteilungsvorrichtung zum Aufteilen einer Mehrzahl von drahtlosen Zugangspunkten in eine Mehrzahl von Verwaltungsclustern von Zugangspunkten, wobei jeder Verwaltungscluster der Mehrzahl von Verwaltungsclustern mindestens einen Zugangspunkt der Mehrzahl von Zugangspunkten umfasst, wobei die Aufteilungsvorrichtung umfasst:

- eine Informationseinholeinheit, die zum Einholen von Nachbarinformationen von jedem Zugangspunkt der Mehrzahl von Zugangspunkten konfiguriert ist, die wenigstens Folgendes umfassen:

    - eine Zugangspunktkennung jedes benachbarten Zugangspunkts, der vom jeweiligen Zugangspunkt erfasst wird; und
    - einen Signalstärkeindikator, der dem erfassten benachbarten Zugangspunkt entspricht;

- eine Bestimmungseinheit, die zum Bestimmen eines Zentralitätsparameters für jeden Zugangspunkt der Mehrzahl von Zugangspunkten basierend auf den eingeholten Nachbarinformationen konfiguriert ist, wobei die Zentralitätsparameter ein Ausmaß an Einfluss darstellt, das der jeweilige Zugangspunkt innerhalb der Mehrzahl von Zugangspunkten aufweist; und
- eine Aufteilungseinheit, die zum Aufteilen der Mehrzahl von Zugangspunkten in einen ersten Verwaltungscluster und mindestens einen weiteren Verwaltungscluster konfiguriert ist und konfiguriert ist zum:

    - Bilden des ersten Verwaltungsclusters durch Einbeziehen eines ersten Zugangspunkts als primäres Mitglied, wobei der erste Zugangspunkt den höchsten Zentralitätsparameter unter der Mehrzahl von Zugangspunkt aufweist, und jedes benachbarten Zugangspunkts, der vom ersten Zugangspunkt erfasst wird, als sekundäres Mitglied in den ersten Verwaltungscluster; und

- Bilden für jeden weiteren Zugangspunkt der Mehrzahl von Zugangspunkten mit Ausnahme des ersten Zugangspunkts in absteigender Zentralitätsparameterreihenfolge eines weiteren Verwaltungsclusters durch Einbeziehen des jeweiligen weiteren Zugangspunkts als primäres Mitglied und jedes benachbarten Zugangspunkts, der durch den jeweiligen weiteren Zugangspunkt erfasst wird und der in keinem anderen Verwaltungscluster als sekundäres Mitglied einbezogen wurde, als sekundäres Mitglied in den weiteren Veraltungscluster.

**9.** Aufteilungsvorrichtung nach Anspruch 8, wobei die Bestimmungseinheit zum Bestimmen des Zentralitätsparameters durch Darstellen der Mehrzahl von Zugangspunkten als Graphen basierend auf den eingeholten Nachbarinformationen konfiguriert ist, wobei jeder Zugangspunkt durch einen Eckpunkt dargestellt wird, und wobei jede Kante zwischen Eckpunkten darstellt, dass entsprechende Zugangspunkte einander erfassen, und wobei der Zentralitätsparameter eines Zugangspunkts eine Menge von kürzesten Pfaden darstellt, die durch den Eckpunkt verlaufen, der dem Zugangspunkt entspricht.

**10.** Aufteilungsvorrichtung nach Anspruch 8 oder 9, wobei

- die Informationseinholeinheit zum Einholen von Aktivitätsinformationen, die eine Datenverbrauchsmenge des jeweiligen Zugangspunkt darstellen, von jedem Zugangspunkt innerhalb eines gebildeten Verwaltungsclusters konfiguriert ist;
- die Bestimmungseinheit zum Bestimmen eines Verwaltungscluster-Aktivitätsgrades des gebildeten Verwaltungsclusters basierend auf den eingeholten Aktivitätsinformationen konfiguriert ist; und
- die Aufteilungseinheit so konfiguriert ist, dass sie den gebildeten Verwaltungscluster umbildet, wenn der Verwaltungscluster-Aktivitätsgrad höher als eine erste vorbestimmte Aktivitätsschwelle ist.

**11.** Aufteilungsvorrichtung nach Anspruch 10, wobei die Aufteilungseinheit so konfiguriert ist, dass sie den gebildeten Verwaltungscluster durch Entfernen mindestens eines sekundären Mitglieds aus dem gebildeten Verwaltungscluster umbildet, derart dass der Cluster-Aktivitätsgrad des umgebildeten Verwaltungsclusters gleich oder unter der ersten vorbestimmten Aktivitätsschwelle ist, wobei die Aufteilungseinheit so konfiguriert ist, dass sie das mindestens eine sekundäre Mitglied basierend auf Nachbarinformationen auswählt, die vom primären Mitglied des Verwaltungsclusters eingeholt werden.

**12.** Aufteilungsvorrichtung nach Anspruch 11, wobei die Aufteilungseinheit zum Zuordnen des mindestens einen entfernten sekundären Mitglieds zu einem anderen gebildeten Cluster konfiguriert ist, wobei das mindestens eine entfernte sekundäre Mitglied durch das primäre Mitglied des anderen gebildeten Clusters erfasst wird, und wobei das primäre Mitglied des umgebildeten Clusters einen höheren Zentralitätsparameter als das primäre Mitglied des anderen gebildeten Clusters aufweist.

**13.** Aufteilungsvorrichtung nach einem der Ansprüche 10 bis 12, wobei ein Zugangspunkt als primäres Mitglied in einen primären Verwaltungscluster und als sekundäres Mitglied in einen sekundären Verwaltungscluster einbezogen wird, wobei die Bestimmungseinheit konfiguriert ist zum:

- Bestimmen eines kombinierten Aktivitätsgrades des primären Verwaltungsclusters und des sekundären Verwaltungsclusters basierend auf den eingeholten Aktivitätsinformationen von jedem Zugangspunkt, der im primären und im sekundären Verwaltungscluster enthalten ist; und wobei die Aufteilungseinheit konfiguriert ist zum:

  - Zuordnen des primären Mitglieds und der sekundären Mitglieder des primären Verwaltungsclusters zum sekundären Verwaltungscluster, wenn der kombinierte Aktivitätsgrad unter einer zweiten vorbestimmten Aktivitätsschwelle ist; oder
  - Entfernen des primären Mitglieds des primären Verwaltungsclusters aus dem sekundären Verwaltungscluster, wenn der kombinierte Aktivitätsgrad gleich oder über der zweiten vorbestimmten Aktivitätsschwelle ist.

**14.** Aufteilungsvorrichtung nach einem der Ansprüche 10 bis 13, ferner umfassend eine Überwachungseinheit, die zum Überwachen eines Zustands der gebildeten Verwaltungscluster und zum Auslösen der Informationseinholeinheit, der Bestimmungseinheit und der Aufteilungseinheit zu vorbestimmten Zeitpunkten konfiguriert ist.

**15.** Computerprogrammprodukt, umfassend ein computerausführbares Programm von Anweisungen zum Ausführen der Schritte des Verfahrens nach einem der Ansprüche 1 bis 7, wenn auf einem Computer ausgeführt.

## Revendications

1. Procédé de partitionnement permettant de partitionner une pluralité de points d'accès sans fil en une pluralité de groupes de gestion de points d'accès, chaque groupe de gestion de la pluralité de groupes de gestion comprenant au moins un point d'accès de la pluralité de points d'accès, le procédé de partitionnement comprenant :

   - l'obtention, depuis chaque point d'accès de la pluralité de points d'accès, d'informations de voisinage comprenant au moins :

     - un identifiant de point d'accès de chaque point d'accès voisin qui est détecté par ledit point d'accès respectif ; et
     - un indicateur de force de signal correspondant audit point d'accès voisin détecté ;

   - la détermination pour chaque point d'accès de la pluralité de points d'accès d'un paramètre de centralité sur la base des informations de voisinage obtenues, le paramètre de centralité étant représentatif d'un degré d'influence dont dispose le point d'accès respectif au sein de la pluralité de points d'accès ; et
   - le partitionnement de la pluralité de points d'accès en un premier groupe de gestion et au moins un groupe de gestion supplémentaire par :

     - la formation du premier groupe de gestion en incluant dans ledit premier groupe de gestion un premier point d'accès comme membre primaire, ledit premier point d'accès ayant le paramètre de centralité le plus élevé parmi la pluralité de points d'accès, et tout point d'accès voisin détecté par ledit premier point d'accès comme membre secondaire ; et
     - pour chaque point d'accès supplémentaire de la pluralité de points d'accès excepté le premier point d'accès, par ordre descendant du paramètre de centralité, la formation d'un groupe de gestion supplémentaire en incluant dans ledit groupe de gestion supplémentaire ledit point d'accès supplémentaire respectif comme membre primaire, et comme membre secondaire tout point d'accès voisin détecté par ledit point d'accès supplémentaire respectif qui n'a pas été inclus comme membre secondaire dans un autre groupe de gestion.

2. Procédé de partitionnement selon la revendication 1, dans lequel la détermination du paramètre de centralité comprend la représentation de la pluralité de points d'accès sous forme de graphique, sur la base des informations de voisinage obtenues, chaque point d'accès étant représenté par un sommet et un bord entre des sommets représentant que des points d'accès correspondants se détectent mutuellement, et le paramètre de centralité d'un point d'accès étant représentatif d'une quantité de trajets les plus courts passant par le sommet correspondant audit point d'accès.

3. Procédé de partitionnement selon la revendication 1 ou 2, comprenant en outre :

   - l'obtention, depuis chaque point d'accès au sein d'un groupe de gestion formé, d'informations d'activité qui sont représentatives d'une quantité de consommation de données dudit point d'accès respectif ; et
   - la détermination d'un niveau d'activité de groupe de gestion dudit groupe de gestion formé sur la base des informations d'activité obtenues ; et
   - la reformation dudit groupe de gestion formé lorsque le niveau d'activité de groupe de gestion est supérieur à un premier seuil d'activité prédéterminé.

4. Procédé de partitionnement selon la revendication 3, dans lequel la reformation dudit groupe de gestion formé comprend l'éviction d'au moins un membre secondaire dudit groupe de gestion formé de sorte que le niveau d'activité de groupe dudit groupe de gestion reformé est égal ou inférieur au premier seuil d'activité prédéterminé, dans lequel ledit au moins un membre secondaire est sélectionné sur la base d'informations de voisinage obtenues depuis le membre primaire dudit groupe de gestion formé.

5. Procédé de partitionnement selon la revendication 4, comprenant en outre l'attribution dudit au moins un membre secondaire évincé à un autre groupe formé, dans lequel ledit au moins un membre secondaire évincé est détecté par le membre primaire de l'autre groupe formé, et dans lequel le membre primaire du groupe reformé présente un paramètre de centralité plus élevé en comparaison avec le membre primaire de l'autre groupe formé.

6. Procédé de partitionnement selon l'une quelconque des revendications précédentes 3 à 5, dans lequel un point d'accès est inclus comme un membre primaire dans un groupe de gestion primaire et comme un membre secondaire dans un groupe de gestion secondaire, le procédé comprenant :

   - la détermination d'un niveau d'activité combiné du groupe de gestion primaire et du groupe de gestion secondaire sur la base des informations d'activité obtenues de chaque point d'accès inclus dans les groupes de gestion primaire et secondaire ; et
- si le niveau d'activité combiné est inférieur à un deuxième seuil d'activité prédéterminé :

- l'attribution du membre primaire et des membres secondaires du groupe de gestion primaire au groupe de gestion secondaire ; ou

- si le niveau d'activité combiné est égal ou supérieur au deuxième seuil d'activité prédéterminé :

- l'éviction du membre primaire du groupe de gestion primaire du groupe de gestion secondaire.

**7.** Procédé de partitionnement selon l'une quelconque des revendications précédentes 3 à 6, dans lequel les étapes de l'obtention d'informations d'activité, de la détermination du niveau d'activité du groupe de gestion et de la reformation du groupe de gestion formé sont exécutées périodiquement.

**8.** Appareil de partitionnement pour partitionner une pluralité de points d'accès sans fil en une pluralité de groupes de gestion de points d'accès, chaque groupe de gestion de la pluralité de groupes de gestion comprenant au moins un point d'accès de la pluralité de points d'accès, l'appareil de partitionnement comprenant :

- une unité d'obtention d'informations configurée pour obtenir depuis chaque point d'accès de la pluralité de points d'accès des informations de voisinage comprenant au moins :

- un identifiant de point d'accès de chaque point d'accès voisin qui est détecté par ledit point d'accès respectif ; et
- un indicateur de force de signal correspondant audit point d'accès voisin détecté ;

- une unité de détermination configurée pour déterminer pour chaque point d'accès de la pluralité de points d'accès un paramètre de centralité sur la base des informations de voisinage obtenues, le paramètre de centralité étant représentatif d'un degré d'influence dont dispose le point d'accès respectif au sein de la pluralité de points d'accès ; et
- une unité de partitionnement configurée pour partitionner la pluralité de points d'accès en un premier groupe de gestion et au moins un groupe de gestion supplémentaire, et configurée pour :

- former le premier groupe de gestion en incluant dans ledit premier groupe de gestion un premier point d'accès comme membre primaire, ledit premier point d'accès ayant le paramètre de centralité le plus élevé parmi la pluralité de points d'accès, et tout point d'accès voisin détecté par ledit premier point d'accès comme membre secondaire ; et
- pour chaque point d'accès supplémentaire de la pluralité de points d'accès excepté le premier point d'accès, par ordre descendant du paramètre de centralité, former un groupe de gestion supplémentaire en incluant dans ledit groupe de gestion supplémentaire ledit point d'accès supplémentaire respectif comme membre primaire, et comme membre secondaire tout point d'accès voisin détecté par ledit point d'accès supplémentaire respectif qui n'a pas été inclus comme membre secondaire dans un autre groupe de gestion.

**9.** Appareil de partitionnement selon la revendication 8, dans lequel l'unité de détermination est configurée pour déterminer le paramètre de centralité en représentant la pluralité de points d'accès sous forme de graphique sur la base des informations de voisinage obtenues, chaque point d'accès étant représenté par un sommet et un bord entre des sommets représentant que des points d'accès correspondants se détectent mutuellement, et le paramètre de centralité d'un point d'accès représentant une quantité de trajets les plus courts passant par le sommet correspondant audit point d'accès.

**10.** Appareil de partitionnement selon la revendication 8 ou 9, dans lequel

- l'unité d'obtention d'informations est configurée pour obtenir, depuis chaque point d'accès au sein d'un groupe de gestion formé, des informations d'activité qui sont représentatives d'une quantité de consommation de données dudit point d'accès respectif ;
- l'unité de détermination est configurée pour déterminer un niveau d'activité du groupe de gestion dudit groupe de gestion formé sur la base des informations d'activité obtenues ; et
- l'unité de partitionnement est configurée pour reformer ledit groupe de gestion formé lorsque le niveau d'activité du groupe de gestion est plus élevé qu'un premier seuil d'activité prédéterminé.

**11.** Appareil de partitionnement selon la revendication 10, dans lequel l'unité de partitionnement est configurée pour reformer ledit groupe de gestion formé en évinçant au moins un membre secondaire dudit groupe de gestion formé de sorte que le niveau d'activité de groupe dudit groupe de gestion reformé est égal ou inférieur au premier seuil d'activité prédéterminé, dans lequel l'unité de partitionnement est configurée pour sélectionner ledit au moins un membre secondaire sur la base d'informations de voisinage obtenues depuis le membre primaire dudit groupe de gestion formé.

**12.** Appareil de partitionnement selon la revendication 11, dans lequel l'unité de partitionnement est configurée pour attribuer ledit au moins un membre secondaire évincé à un autre groupe formé, dans lequel ledit au moins un membre secondaire évincé est détecté par le membre primaire de l'autre groupe formé, et dans lequel le membre primaire du groupe reformé présente un paramètre de centralité plus élevé en comparaison avec le membre primaire de l'autre groupe formé.

**13.** Appareil de partitionnement selon l'une quelconque des revendications précédentes 10 à 12, dans lequel un point d'accès est inclus comme un membre primaire dans un groupe de gestion primaire et comme un membre secondaire dans une groupe de gestion secondaire, l'unité de détermination étant configurée pour :

- déterminer un niveau d'activité combiné du groupe de gestion primaire et du groupe de gestion secondaire sur la base des informations d'activité obtenues de chaque point d'accès inclus dans les groupes de gestion primaire et secondaire ; et dans lequel l'unité de partitionnement est configurée pour :

  - attribuer le membre primaire et les membres secondaires du groupe de gestion primaire au groupe de gestion secondaire si le niveau d'activité combiné est inférieur à un deuxième seuil d'activité prédéterminé ; ou
  - évincer le membre primaire du groupe de gestion primaire du groupe de gestion secondaire si le niveau d'activité combiné est égal ou supérieur au deuxième seuil d'activité prédéterminé.

**14.** Appareil de partitionnement selon l'une quelconque des revendications précédentes 10 à 13, comprenant en outre une unité de surveillance configurée pour surveiller un état des groupes de gestion formés et pour déclencher l'unité d'obtention d'informations, l'unité de détermination et l'unité de partitionnement à des instants prédéterminés.

**15.** Produit de programme informatique, comprenant un programme exécutable par ordinateur composé d'instructions pour effectuer, lorsqu'elles sont exécutées sur un ordinateur, les étapes du procédé selon l'une quelconque des revendications 1 à 7.

100
110
OBTAINING NEIGHBOUR INFORMATION
120
DETERMINING CENTRALITY PARAMETER
130
PARTITIONING INTO CLUSTERS BASED ON NEIGHBOUR INFORMATION AND CENTRALITY PARAMETER

FIG. 1A

100
110
120
130
131
FORMING FIRST MANAGEMENT CLUSTER
132
FORMING FIRST FURTHER MANAGEMENT CLUSTER
133
FORMING SECOND FURTHER MANAGEMENT CLUSTER

FIG. 1B

201
202

FIG. 2

300
310
320
330
340 OBTAINING ACTIVITY INFORMATION FROM ACCESS POINTS
375
350 DETERMINING ACTIVITY LEVEL OF MANAGEMENT CLUSTER
360
ACTIVITY LEVEL HIGHER THAN ACTIVITY THRESHOLD ?
YES
NO
370 REFORMING MANAGEMENT CLUSTER
NO ACTION

FIG. 3A

300
310
320
331
332
333
340
350a
350b
350c
375c
375c
375c
YES
360a
YES
360b
YES
360c
370a
370b
370c

FIG. 3B

350
375
YES
360
NO
NO ACTION
370
371
EVICTING SECONDARY MEMBER WHICH IS FURTHEST AWAY FROM PRIMARY MEBER BASED ON NEIGHBOUR INFORMATION OBTAINED FROM THE PRIMARY MEMBER
380
ASSIGNING EVICTED SECONDARY MEMBER TO A FURTHER CLUSTER

FIG. 4

590 DETERMINING A COMBINED ACTIVITY LEVEL
591
COMBINED ACTIVITY LEVEL BELOW ACTIVITY THRESHOLD ?
YES
NO
592
ASIGNING PRIMARY AND SECONDARY MEMBERS OF PRIMARY MANAGEMENT CLUSTER TO SECONDARY MANAGEMENT CLUSTER
593
EVICTING PRIMARY MEMBER OF PRIMARY MANAGEMENT CLUSTER FROM SECONDARY MANAGEMENT CLUSTER

FIG. 5

FIG. 6A

FIG. 6B

FIG. 6C

700
710 Obtaining data
720 Betweeness centrality calculation
730 Initial cluster formation
791 Cluster merging
792 Cluster formation exposing
CLUSTER MONITORING
755 Increased activity or relocation detection
770 Cluster reconfiguration

FIG. 7

801
801
801
801
801
801
800
810
820
830

FIG. 8

900
910
920
930
990

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Optimal degree centrality based algorithm for cluster head selection in wireless sensor networks. **JAIN AARTI et al.** RECENT ADVANCES IN ENGINEERING AND COMPUTATIONAL SCIENCES (RAECS). IEEE, 06 March 2014, 1-6